# FASCICULE DE BREVET EUROPEEN

(11) **EP 1 419 842 B1**
(45) Date de publication et mention de la délivrance du brevet: **25.06.2014**
(21) Numéro de dépôt: 03292760.0
(22) Date de dépôt: 04.11.2003
(51) Int. Cl.: B23K 1/20, B23K 35/36

(54) **Procédé de soudage d'éléments en aciers inoxydables ou en alliage base nickel type alliage 625**
Verfahren zum Schweissen von aus nichtrostendem Stahl oder Nickellegierung des Typs Legierung 625 bestehenden Elementen
Welding method for elements made of stainless steel or nickel alloy type alloy 625

(30) Priorité: 14.11.2002 FR 0214218
(43) Date de publication de la demande: 19.05.2004
(73) Titulaire: DCN, 75015 Paris (FR)
(72) Inventeur: Cortial, Francois, 44120 Vertou (FR)
(74) Mandataire: Lagrange, Jacques Etienne M.M.

(56) Documents cités:
- EP-A- 0 829 324
- WO-A-00/54928
- WO-A-01/14094
- FR-A- 2 042 905
- US-A- 5 804 792

## Description

L'invention concerne le domaine du soudage des pièces en aciers inoxydables ou en alliage base nickel du type alliage 625.

Plus particulièrement, l'invention a pour objet un procédé de soudage automatique d'éléments en aciers inoxydables ou en alliage base nickel de type alliage 625 avec dépôt préalable sur les surfaces des pièces à souder d'une poudre d'oxyde de titane en suspension dans un mélange d'acétone et d'eau tel que revendiqué dans la revendication 1.

Ce procédé est appliqué au soudage d'éléments de circuits sous pression, dont les installations nucléaires, pour lesquelles les normes de qualité requises sont très rigoureuses.

Il est connu que les pièces en aciers inoxydables présentent souvent une aptitude au soudage médiocre qui se caractérise par une pénétration insuffisante de la soudure à la vitesse usuelle de l'installation de soudage.

Le meilleur procédé automatique de soudage des aciers inoxydables est le procédé de soudage à l'arc électrique avec électrode de tungstène sous protection de gaz inerte (TIG), pour lequel l'augmentation des épaisseurs soudables fait intervenir l'application d'un flux actif (Activating Flux) conduisant à la dénomination de procédé A-TIG. On s'intéresse au procédé en mode automatique orbital, c'est-à-dire avec la tête de soudage tournant autour de la partie à souder.

Le procédé A-TIG consiste à déposer, préalablement à l'établissement de l'arc électrique TIG, un flux actif au droit du joint à souder.
Ce flux peut être déposé à l'aide d'un pinceau ou à l'aide d'une bombe aérosol.

Il existe un grand nombre de formulations de flux, généralement gardées secrètes qui comprennent des associations de composés variés, tels que des oxydes ou des halogénures métalliques.

Le flux actif peut être obtenue par dispersion du flux de base dans un liquide volatil.

On ne dispose pas obligatoirement de fiches d'hygiène et sécurité pour ces formulations de flux.

L'acétone est fréquemment utilisée en qualité de solvant.

Il est à noter que tout autre solvant organique est utilisable, à condition qu'il ne pose pas de problèmes d'hygiène et de sécurité pour les utilisateurs que sont les soudeurs et les opérateurs.

Le brevet FR 2 042 905 divulgue, notamment, l'utilisation d'un flux constitué par au moins un oxyde choisi parmi les oxydes de fer, de chrome, de silicium, de titane, de manganèse, de nickel, de cobalt, de molybdène et de calcium, en suspension dans un liquide volatil.

On applique la suspension sur l'acier inoxydable et on laisse évaporer le liquide volatil de manière à déposer la couche d'oxyde sur la surface de l'acier. Ce revêtement d'oxyde permet une pénétration totale de la soudure et à des vitesses de soudage sensiblement accrues. Les meilleurs résultats sont obtenus avec les oxydes de fer et de chrome. L'acétone est citée comme liquide volatil pouvant être utilisé.

Cependant, ce document ne fournit pas de données industrielles sur le soudage A-TIG des tuyauteries de circuits sous pression où les exigences sont très élevées.

Le brevet US 5 804 792 décrit un flux actif pour le soudage de pièces en aciers inoxydables qui permet d'augmenter la pénétration de la soudure grâce à une association de pur oxyde de titane mélangé à de l'oxyde de chrome et à de la silice dans un solvant tel que la méthyléthylcétone, l'acétone étant considérée comme solvant inapproprié par suite de son séchage trop rapide.

Le procédé décrit dans ce document ne semble pas applicable au soudage industriel, en raison de l'exigence notamment d'un oxyde de titane pur dont le coût est élevé.

Le but de l'invention est de fournir un procédé de soudage automatique de tuyauteries en aciers inoxydables avec flux actif (A-TIG) parfaitement reconductible, au moindre coût, tout en satisfaisant systématiquement les critères imposés de qualité des joints soudés.

Dans ce but, il était nécessaire de rechercher un flux actif de composition chimique simple, reproductible, non toxique vis-à-vis des soudeurs et de faible coût économique.

Pour ce faire, l'invention a pour objet un procédé de soudage d'éléments en aciers inoxydables comprenant les étapes suivantes :
- application au droit des éléments à souder d'un flux actif constitué par une poudre d'un oxyde métallique en suspension dans un solvant,
- soudage des éléments à assembler en utilisant une tête de soudage comprenant un arc électrique avec électrode de tungstène et un gaz de protection inerte,
caractérisé en ce que le flux actif est constitué par une poudre de dioxyde de titane en suspension dans un mélange d'acétone et d'eau.

De manière inattendue, le procédé de l'invention permet de respecter un cahier des charges strict concernant les soudures des tuyauteries de circuits sous pression, tout en étant peu onéreux.

A la différence des autres techniques décrites, le procédé selon l'invention consiste à obtenir la circonstance idéale du flux à déposer par dilution d'une poudre de dioxyde de titane dans un liquide volatil associant de l'acétone et de l'eau.L'utilisation conjointe d'acétone et d'eau est indispensable pour réussir une suspension parfaite des grains de poudre et permettre de réaliser un dépôt possédant l'homogénéité requise.

La seule dilution de dioxyde de titane dans l'acétone n'est pas suffisamment efficace en terme de reproductibilité vis-à-vis des exigences de fabrication. En effet, l'hygrométrie naturelle de la poudre de dioxyde de titane varie selon les conditions extérieures et l'utilisation de cette poudre n'est pas gérable de façon simple et reproductible dans des ateliers de production.

Le procédé selon l'invention est appliqué au soudage en mode orbital, c'est-à-dire avec la tête de soudage tournant autour des éléments à souder.

Selon un mode de réalisation préféré, la poudre en dioxyde de titane que l'on utilise est une poudre à 99% de pureté.

Un des objectifs était de posséder un flux actifs de composition chimique simple, non toxique et reproductible.

Le choix s'est porté sur la poudre de dioxyde de titane à 99% de pureté, aisément disponible sur le marché des produits chimiques et peu onéreuse.

La poudre à 99% de dioxyde de titane est utilisée pour les essais des laboratoires de chimie.

Elle présente une granulométrie suffisamment fine pour ne pas modifier l'efficacité de l'activité du flux.

Il était nécessaire de trouver un solvant supérieur à l'acétone seule qui est à l'origine de mélange pas suffisamment efficaces, par suite de la variation des quantités d'oxydes dans les dépôts de flux actifs.

L'ajout de l'eau a pour but de permettre un libre accès des molécules d'acétone aux interfaces des grains de dioxyde de titane et de favoriser ainsi une dispersion homogène de l'oxyde dans le solvant.

Préférentiellement, le flux actif est préparé à partir d'une partie en volume de poudre de dioxyde de titane pour une quantité comprise entre 1,5 et 3 parties en volume d'acétone, et de préférence entre 1,8 et 2,2 parties en volume d'acétone, et mieux encore, environ 2 parties en volume d'acétone.

Il n'y a pas de dosage particulier de la quantité d'eau à ajouter au mélange de poudre de dioxyde de titane et d'acétone. Cependant, l'eau doit être apportée par un goutte à goutte via une tige trempée préalablement dans de l'eau, chaque goutte ayant un volume inférieur ou égale à 50 mm³, et de préférence inférieur ou égal à 30mm³, le goutte à goutte étant arrêté dès que le mélange entre le dioxyde de titane, l'acétone et l'eau présente une consistance pâteuse et une couleur blanche uniforme et est exempt de toute partie de miscibilité médiocre.

Afin de tester l'homogénéité du mélange, on enduit une surface lisse qui peut être une plaque ou une tôle en acier à proximité du poste de soudage et on vérifie que l'on obtient une texture sans parties granuleuses après séchage. Les granules correspondent à des miscibilités locales dans le mélange médiocres.

Cet aspect homogène, uniforme, sans granule est la garantie d'un dépôt qui, après séchage sur les joints à souder, ne présentera pas de variations de quantités d'oxyde nuisibles à l'effet A-TIG optimisé avec les paramètres opératoires de soudage efficaces pour le mélange de poudre de dioxyde de titane humide et d'acétone.

En pratique, l'aspect homogène est obtenu pour une quantité d'eau en volume comprise entre 0,5% et 2,5% du volume du mélange de dioxyde de titane et d'acétone.

Le mode d'application homogène que l'on privilégie est l'application au pinceau.

Préférentiellement, on applique une seule couche.

La couche ne doit pas excéder quelques millimètres de part et d'autre des éléments à souder.

En procédant de cette façon, on n'altère pas l'efficacité du flux, tandis que l'application de plus de deux couches diminuerait l'efficacité du flux. Selon un mode de réalisation, les éléments à souder sont des tubes et accessoires en aciers inoxydables.

Ces tubes et accessoires en aciers inoxydables font partie de circuits sous pression.

Les joints soudés doivent répondre aux exigences les plus sévères de qualité dimensionnelle et de compacité des joints soudés de circuits sous pression.

Il s'agit de souder des tubes d'aciers inoxydables d'épaisseur inférieure ou égale à 6 mm à assembler par soudage bout à bout, sans chanfrein, sans métal d'apport fil mais avec possibilité d'anneau fusible inséré dans le joint.

D'autres caractéristique et avantages de l'invention apparaîtront dans la description détaillée, non limitative d'exemples de réalisation ci-après.
Les exemples ci-dessous concernent le soudage de tubes en acier 316L, de type AISI, présentant un diamètre extérieur de 48 mm et une épaisseur de 6 mm, avec un anneau fusible et en position de tube horizontal.

Dans chaque cas, on procède par soudage à l'arc, avec électrode de tungstène thorié et des gaz de protection endroit (torche) et envers qui peuvent être de l'argon seul ou de l'argon et un mélange d'argon et d'hélium amenés sous un débit variant entre 3 l/mn et 13 l/mn. On utiliser un courant de soudure de 55 à 125 ampères.

Le tableau ci-dessous indique les conditions opératoires.

Les passes désignent le nombre de couches à déposer.

La vitesse de rotation de la tête de soudure est désignée par V Rot.

La vitesse de dévidement du fil d'apport est désignée par V fil.

Le temps d'usinage du chanfrein en U augmenté du temps de soudage est désigné par T usinage + arc.

Le tableau ci-dessous fait apparaître que l'utilisation du procédé A-TIG avec flux de dioxyde de titane dilué dans l'acétone permet un gain de temps considérable, étant donné que l'on passe de 6 heures à ½ heure.

Cependant, en l'absence d'addition d'eau, les exigences de conformité ne sont pas toujours satisfaites. Seule l'ajout d'eau assure la conformité de manière reproductible.

| Technique | Chanfrein | Passes | Gaz | I (A) | VRot (cm/mn) | Vfil (m/mn) | T usinage + arc | Conformité |
|---|---|---|---|---|---|---|---|---|
| TIG orbital | En U à 20° Talon 2,5 | Fusion du talon + 5 passes | Torche : Ar 9-11 l/mn | 55-125 | 4 (moy) | 1,2 | 6 | oui |
| | | | Envers : Ar 4-6 l/mn | | 10,8 | | | |
| TIG orbital Flux TiO₂ dans acétone | Sans | Fusion sur l'épais seur | Torches : He-Ar (70/30) 11-13 l/mn | 78-105 | 7,3 | Sans | 0,5 | Oui non |
| | | | Envers : Ar 3-5 l/mn | | | | | |
| A-TIG Orbital Flux TiO₂ dans acétone + H₂O | Sans | Fusion sur l'épais seur | Torches : He-Ar (70/30) 11-13 l/mn | 78-105 | 7,3 | Sans | 0,5 | Oui |
| | | | Envers: Ar 3-5 l/mn | | | | | |

Le procédé de soudage selon l'invention est également applicable aux pièces en alliages métalliques dont les caractéristiques thermophysiques de dissipation thermique sont proches de celles des aciers inoxydables, plus particulièrement les alliages à base de nickel, de type alliage 625.

## Revendications

1. Procédé de soudage d'éléments en aciers inoxydables ou en alliage base nickel de type alliage 625 comprenant les étapes suivantes :
- application au droit de l'élément à souder d'un flux actif constitué par une poudre d'un oxyde métallique en suspension dans un solvant,
- soudage des éléments à assembler en utilisant une tête de soudage comprenant un arc électrique avec électrode de tungstène et un gaz de protection inerte,
**caractérisé en ce que** le flux actif est constitué par une poudre de dioxyde de titane en suspension dans un mélange d'acétone et d'eau et **en ce que** le soudage est effectué en mode automatique orbital, c'est-à-dire avec la tête de soudage tournant autour des éléments à souder.

2. Procédé selon la revendication 1, **caractérisé en ce que** la poudre de dioxyde de titane est une poudre à 99 % de pureté.

3. Procédé selon la revendication 1 ou 2, **caractérisé en ce que** le flux actif est préparé à partir d'une partie en volume de poudre de dioxyde de titane pour une quantité comprise entre 1,5 et 3 parties en volume d'acétone.

4. Procédé selon la revendication 3, **caractérisé en ce que** la quantité d'acétone est comprise entre 1,8 et 2,2 parties en volume d'acétone.

5. Procédé selon la revendication 3 ou la revendication 4, **caractérisé en ce que** l'eau est apportée par un goutte à goutte via une tige trempée préalablement dans l'eau, chaque goutte ayant un volume inférieur ou égal à 50 mm³ et de préférence à 30 mm³, le goutte à goutte étant arrêté dès que le mélange de poudre de dioxyde de titane, d'acétone et d'eau présente une consistance pâteuse, d'une couleur blanche soutenue et uniforme et est exempt de toute partie de miscibilité médiocre.

6. Procédé selon la revendication 5, **caractérisé en ce que** l'on s'assure que le mélange de poudre de dioxyde de titane, d'acétone et d'eau est homogène en le déposant, préalablement au dépôt sur les éléments à souder, sur une surface lisse à proximité du poste de soudage et en vérifiant que l'on obtient une texture sans parties granuleuses après séchage.

7. Procédé selon l'une quelconque des revendications 3 à 6, **caractérisé en ce que** la quantité d'eau incorporée au mélange de poudre de dioxyde de titane et d'acétone est comprise entre 0,5% et 2,5% du volume du mélange.

8. Procédé selon l'une quelconque des revendications précédentes, **caractérisé en ce que** le flux actif est appliqué au pinceau sur les éléments en aciers inoxydables à enduire.

9. Procédé selon la revendication 8, **caractérisé en ce que** le flux actif est appliqué au pinceau en une seule couche.

10. Procédé selon la revendication 9, **caractérisé en ce que** la couche d'application au pinceau n'excède pas quelques millimètres de part et d'autre des éléments à souder.

11. Procédé selon l'une quelconque des revendications précédentes, **caractérisé en ce que** les éléments à souder sont des tubes et accessoires en aciers inoxydables ou en alliage base nickel du type alliage 625.

## Patentansprüche

1. Verfahren zum Verschweißen von Elementen aus rostfreien Stählen oder einer Legierung auf Nickelbasis des Typs Legierung 625, das die folgenden Schritte umfasst:
- Anwenden am Ort des zu verschweißenden Elements eines aktiven Flusses, der aus einem Metalloxidpulver in Suspension in einem Lösungsmittel gebildet ist, und
- Verschweißen der zusammenzufügenden Elemente unter Verwendung eines Schweißkopfes, der einen Lichtbogen mit Wolframelektrode und ein Schutz-Inertgas enthält,
**dadurch gekennzeichnet, dass** der aktive Fluss durch ein Titandioxid-Pulver in Suspension in einem Gemisch aus Aceton und Wasser gebildet ist und dass das Verschweißen in einer automatischen Orbitalbetriebsart erfolgt, d. h., dass sich der Schweißkopf um die zu verschweißenden Elemente dreht.

2. Verfahren nach Anspruch 1, **dadurch gekennzeichnet, dass** das Titandioxid-Pulver ein Pulver mit 99 % Reinheit ist.

3. Verfahren nach Anspruch 1 oder 2, **dadurch gekennzeichnet, dass** der aktive Fluss anhand eines Volumenanteils des Titandioxid-Pulvers für eine Menge im Bereich von 1,5 bis 3 Volumenanteilen Aceton zubereitet wird.

4. Verfahren nach Anspruch 3, **dadurch gekennzeichnet, dass** die Acetonmenge im Bereich von 1,8 bis 2,2 Volumenanteile Aceton liegt.

5. Verfahren nach Anspruch 3 oder nach Anspruch 4, **dadurch gekennzeichnet, dass** das Wasser tropfenweise durch einen vorher in das Wasser getauchten Stift hinzugefügt wird, wobei jeder Tropen ein Volumen besitzt, das kleiner oder gleich 50 mm³ und vorzugsweise 30 mm³ ist, wobei der Tropfvorgang angehalten wird, sobald das Gemisch aus Pulver und Titandioxid, Aceton und Wasser eine breiartige Konsistenz mit kräftiger und gleichmäßiger weißer Farbe aufweist und frei von jeglichem Teil mit mäßiger Mischbarkeit ist.

6. Verfahren nach Anspruch 5, **dadurch gekennzeichnet, dass** sichergestellt wird, dass das Gemisch aus Titandioxid-Pulver, Aceton und Wasser homogen ist, indem es vor der Aufbringung auf die zu verschweißenden Elemente auf eine glatte Oberfläche in der Nähe der Schweißstation aufgebracht wird und indem geprüft wird, dass nach dem Trocknen eine Textur ohne körnige Anteile erhalten wird.

7. Verfahren nach einem der Ansprüche 3 bis 6, **dadurch gekennzeichnet, dass** die in das Gemisch aus Titandioxid-Pulver und Aceton eingearbeitete Wassermenge im Bereich von 0,5 Vol.-% bis 2,5 Vol.-% des Gemisches liegt.

8. Verfahren nach einem der vorhergehenden Ansprüche, **dadurch gekennzeichnet, dass** der aktive Fluss mittels eines Pinsels auf die zu bestreichenden Elemente aus rostfreien Stählen aufgebracht wird.

9. Verfahren nach Anspruch 8, **dadurch gekennzeichnet, dass** der aktive Fluss mittels eines Pinsels in einer einzigen Schicht aufgebracht wird.

10. Verfahren nach Anspruch 9, **dadurch gekennzeichnet, dass** die mittels eines Pinsels aufgebrachte Schicht mehrere Millimeter beiderseits der zu verschweißenden Elemente nicht überschreitet.

11. Verfahren nach einem der vorhergehenden Ansprüche, **dadurch gekennzeichnet, dass** die zu verschweißenden Elemente Rohre und Zubehörteile aus rostfreien Stählen oder aus einer Legierung auf Nickelbasis des Typs Legierung 625 sind.

## Claims

1. Method for welding elements made of stainless steels or of nickel-based alloy of the alloy 625 type, comprising the following steps:
- application in line with the element to be welded of an activating flux composed of a metal oxide powder in suspension in a solvent,
- welding of the elements to be assembled using a welding head comprising an electric arc with a tungsten electrode and an inert shielding gas,
**characterised in that** the activating flux is composed of a titanium dioxide powder in suspension in a mixture of acetone and water, and **in that** welding is carried out in automatic orbital mode, that is to say with the welding head rotating about the elements to be welded.

2. Method according to claim 1, **characterised in that** the titanium dioxide powder is a powder with 99% purity.

3. Method according to claim 1 or 2, **characterised in that** the activating flux is prepared from one part by volume of titanium dioxide powder for a quantity of from 1.5 to 3 parts by volume of acetone.

4. Method according to claim 3, **characterised in that** the quantity of acetone is from 1.8 to 2.2 parts by volume of acetone.

5. Method according to claim 3 or claim 4, **characterised in that** water is supplied by means of a drip via a rod which has previously been immersed in the water, each drop having a volume less than or equal to 50 mm³ and preferably to 30 mm³, the drip being stopped as soon as the mixture of titanium dioxide powder, acetone and water has a pasty consistency, of a strong and uniform white colour, and is free of any portion of poor miscibility.

6. Method according to claim 5, **characterised in that** it is ensured that the mixture of titanium dioxide powder, acetone and water is homogeneous by depositing it, before it is deposited on the elements to be welded, on a smooth surface close to the welding station and checking that a texture without granular portions is obtained after drying.

7. Method according to any one of claims 3 to 6, **characterised in that** the quantity of water incorporated into the mixture of titanium dioxide powder and acetone is from 0.5% to 2.5% of the volume of the mixture.

8. Method according to any one of the preceding claims, **characterised in that** the activating flux is applied by means of a brush to the elements made of stainless steels that are to be coated.

9. Method according to claim 8, **characterised in that** the activating flux is applied by means of a brush in a single layer.

10. Method according to claim 9, **characterised in that** the layer applied by means of a brush does not exceed several millimetres on either side of the elements to be welded.

11. Method according to any one of the preceding claims, **characterised in that** the elements to be welded are tubes and accessories made of stainless steels or of nickel-based alloy of the alloy 625 type.
